(19) Europäisches Patentamt
European Patent Office
Office européen des brevets

(11) EP 2 431 791 B1

(12) # FASCICULE DE BREVET EUROPEEN

(45) Date de publication et mention de la délivrance du brevet:
**09.05.2012 Bulletin 2012/19**

(51) Int Cl.:
***G02F 1/11*** *(2006.01)*

(21) Numéro de dépôt: **10177128.5**

(22) Date de dépôt: **16.09.2010**

(54) **Procédé et dispositif pour le filtrage acousto-optique de grande longueur d'interaction optique et acoustique**

Verfahren und Vorrichtung zur akusto-optischen Filterung mit großer akusto-optischer Interaktionslänge

Acoustic-optical filtering method and device based on a long acousto-optical interaction

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**21.03.2012 Bulletin 2012/12**

(73) Titulaire: **Fastlite
75013 Paris (FR)**

(72) Inventeurs:
- **Kaplan, Daniel
75006, Paris (FR)**
- **Tournois, Pierre
06800, Cagnes s/mer (FR)**

(74) Mandataire: **Mazabraud, Xavier
Cabinet Moutard
35 Rue de la Paroisse
B.P. 20513
78005 Versailles Cedex (FR)**

(56) Documents cités:
**EP-A1- 2 040 109**

- **VOLOSHINOV V B ET AL: "Application of acousto-optic interactions in anisotropic media for control of light radiation", ACUSTICA UNITED WITH ACTA ACUSTICA, S. HIRZEL VERLAG, STUTTGART, DE, vol. 89, no. 6, 1 novembre 2003 (2003-11-01), pages 930-935, XP009125427, ISSN: 1610-1928**
- **TORCHIGIN V P ET AL: "Enlarged shift of light frequency in a modified Bragg cell", PURE AND APPLIED OPTICS. JOURNAL OF THE EUROPEAN OPTICAL SOCIETYPART A, INSTITUTE OF PHYSICS PUBLISHING, BRISTOL, GB, vol. 7, 1 juillet 1998 (1998-07-01), pages 763-782, XP002554337, ISSN: 0963-9659, DOI: DOI:10.1088/0963-9659/7/4/013**
- **VOLOSHINOV V B: "Elastic anisotropy of acousto-optic interaction medium", PROCEEDINGS OF THE INTERNATIONAL SOCIETY FOR OPTICAL ENGINEERING (SPIE), SPIE, USA, vol. 4514, 1 janvier 2001 (2001-01-01), pages 8-19, XP002512999, ISSN: 0277-786X, DOI: DOI:10.1117/12.447607**
- **MAKAROV O YU ET AL: "Visualization of back reflected acoustic waves in paratellurite single crystals by means of acousto-optics", PROCEEDINGS OF THE INTERNATIONAL SOCIETY FOR OPTICAL ENGINEERING (SPIE), SPIE, USA, vol. 5953, no. 1, 30 août 2005 (2005-08-30), pages 59530X-1, XP002554338, ISSN: 0277-786X, DOI: DOI:10.1117/12.622933 [extrait le 2005-09-24]**
- **KAPLAN D ET AL: "THEORY AND PERFORMANCE OF THE ACOUSTO OPTIC PROGRAMMABLE DISPERSIVE FILTER USED FOR FEMTOSECOND LASER PULSE SHAPING", JOURNAL DE PHYSIQUE IV, EDITIONS DE PHYSIQUE. LES ULIS CEDEX, FR, vol. 12, 1 janvier 2002 (2002-01-01), pages 69-75, XP001156188, ISSN: 1155-4339**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 431 791 B1

Printed by Jouve, 75001 PARIS (FR)

## Description

La présente invention concerne un procédé et un dispositif pour le filtrage acousto-optique de grande longueur d'interaction optique et acoustique.

Ce procédé s'applique notamment aux dispositifs dont la configuration est telle que la direction de propagation de l'énergie du faisceau optique (dite direction du faisceau optique et caractérisée par le vecteur de Poynting) est confondue avec la direction de propagation de l'énergie du faisceau acoustique (dite direction du faisceau acoustique). Cette condition assure la plus grande longueur d'interaction possible entre les ondes optiques et acoustiques, ce qui est favorable pour l'efficacité d'interaction. Par ailleurs, lorsque ces dispositifs sont utilisés pour une fonction de filtrage spectrale de l'onde optique, cette condition favorise l'obtention d'une résolution spectrale élevée.

D'une façon générale, on sait que les conditions conduisant à l'interaction colinéaire dans un matériau biréfringent ont été discutées par V.B. Voloshinov dans : « Close to collinear acousto-optique interaction in Paratellurite », Optical Engineering, 31 (1992), p. 2089. Il est bien connu que lorsque le cristal utilisé est fortement anisotrope et biréfringent, la colinéarité des faisceaux acoustiques et optiques n'implique pas la colinéarité des vecteurs d'ondes acoustiques et optiques. L'article "Application of Acousto-Optic Interactions in Anisotropic Media for Control of Light Radiation" par V.B. Voloshinov et N.V. Polikarpova (Acta Acustica united with Acustica, vol. 89 (2003), pages 930-935) présente un dispositif de filtrage acousto-optique tel que défini dans le préambule de la revendication 5. Le brevet français FR 9610717 de P. Tournois « Dispositif de contrôle d'impulsions lumineuses par un dispositif programmable acousto-optique » et la publication de D. Kaplan et de P. Tournois « Theory and performance of the acousto-optic programmable dispersive filter used for femtosecond laser pulse shaping », J. Phys. IV, 12 (2002), Pr5-69/75, décrivent l'utilisation d'une configuration colinéaire pour réaliser un filtrage spectrale programmable en amplitude et en phase d'impulsions laser. Le dioxyde de tellure ou Paratellurite, matériau fortement anisotrope, est le plus utilisé pour cette application.

L'allongement de la longueur du dispositif pour augmenter la longueur d'interaction est limité technologiquement par les capacités existantes à ce jour de croissance cristalline. Concernant le dioxyde de Tellure, par exemple, les dispositifs disponibles sont limités à quelques centimètres de longueur. Une solution consiste à replier les faisceaux par des réflexions optiques et acoustiques sur les faces cristallines qui maintiennent la colinéarité optique et acoustique. Néanmoins, le caractère anisotrope du cristal et la très grande différence des directions de vecteur d'onde et de faisceau auront, en général, pour effet que des faisceaux colinéaires avant réflexion ne seront plus colinéaires après réflexion.

Les seules classes cristallines permettant de répondre à ces exigences sont celles pour lesquelles les axes de symétrie optiques et acoustique sont confondus, telles que, par exemple, les classes cristallines tétragonales 422, 4/mmm et 4/2m.

Les matériaux combinant cette condition et les performances adéquates pour une telle application sont : le dioxyde de Tellure ($TeO_2$), les halogénures de Mercure ($Hg_2Cl_2$, $Hg_2Br_2$, $Hg_2I_2$), et le KDP ; parmi ces matériaux, seuls le dioxyde de Tellure ($TeO_2$), le Calomel ($Hg_2Cl_2$), et le KDP sont aujourd'hui susceptibles d'exploitation industrielle.

L'invention a donc pour objet un procédé et un dispositif pour le filtrage acousto-optique de grande longueur d'interaction optique et acoustique; elle propose, à cet effet, un procédé et un dispositif de filtrage acousto-optique tels que définis dans les revendications 1 et 5, et notamment l'utilisation un cristal acousto-optique biréfringent dont la vitesse de propagation des ondes acoustiques est la plus faible possible, lequel cristal acousto-optique comprend sur l'une de ses faces, un transducteur piézo-électrique destiné à générer une onde acoustique transversale dont l'énergie se propage de manière colinéaire à l'énergie d'une onde optique incidente, tout au long du trajet de ladite onde optique incidente, dans le susdit cristal acousto-optique biréfringent, sachant que l'onde acoustique transversale et l'onde optique incidente parcourent un trajet comportant des réflexions multiples sur l'une ou l'autre des faces réfléchissantes du cristal acousto-optique biréfringent perpendiculaires aux axes de symétrie communs à la courbe des lenteurs acoustiques et aux courbes des indices optiques ordinaire et extraordinaire dudit cristal acousto-optique.

Un mode de mise en oeuvre du procédé selon l'invention sera décrit ci-après, à titre d'exemple non limitatif, avec référence aux dessins annexés dans lesquels :

La figure 1 est une représentation schématique pour un cristal anisotrope de la courbe des lenteurs acoustiques et des courbes des indices optiques ordinaire et extraordinaire définissant la composition des vecteurs d'onde acoustique et optiques, caractéristiques de l'interaction acousto-optique ;

La figure 2 est une représentation schématique d'un premier exemple de réflexion des faisceaux acoustique et optique sur un plan oblique, parallèle à l'axe Oy du cristal biréfringent;

La figure 3 est une représentation schématique d'un deuxième exemple de réflexion des faisceaux acoustique et optique sur un plan parallèle aux axes Oy et Ox du cristal biréfringent;

La figure 4 représente un premier exemple d'une représentation schématique d'une structure de filtre acousto-optique de grande longueur d'interaction optique et acoustique dans le dioxyde de Tellure;

La figure 5 représente un deuxième exemple d'une représentation schématique d'une structure de filtre acousto-optique de grande longueur d'interaction optique et acoustique dans le Calomel, et

La figure 6 représente un troisième exemple d'une représentation schématique d'une structure de filtre acousto-optique de grande longueur d'interaction optique et acoustique dans le KDP.

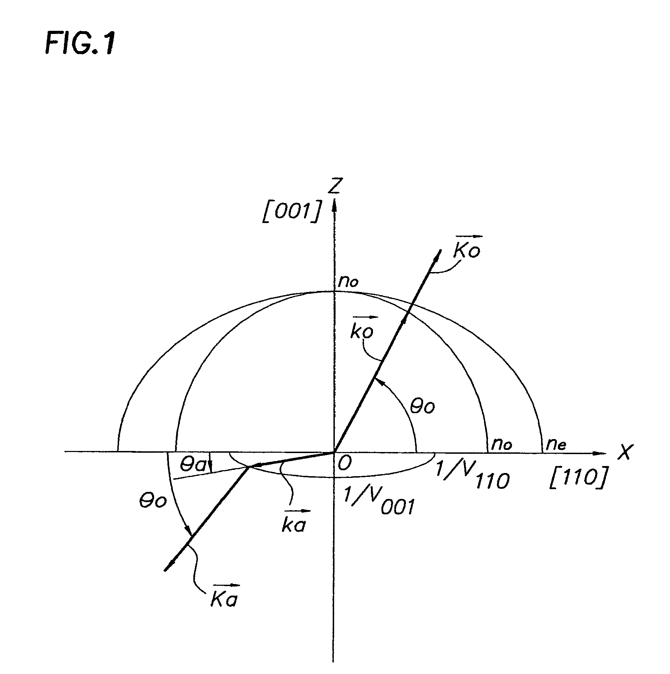

Dans l'exemple représenté sur la figure 1, la représentation schématique des courbes de indices optiques ordinaire et extraordinaire (cadrans supérieurs) et de la courbe des lenteurs acoustiques (cadrans inférieurs) montre, dans le système orthonormé défini par les axes Ox et Oz du cristal biréfringent, les vecteurs d'onde acoustique et d'onde optique incidente, respectivement $k_a$ et $k_0$ ; le vecteur d'onde acoustique $k_a$ fait un angle $\theta_a$ avec l'axe Ox ; le vecteur d'onde optique incidente $k_o$ fait un angle $\theta$ avec l'axe Ox.

Le vecteur de Poynting optique Ko est colinéaire avec le vecteur d'onde optique incidente $k_o$ ; le vecteur de Poynting acoustique Ka est parallèle avec le vecteur optique Ko et fait par conséquent un angle $\theta$ avec l'axe Ox.

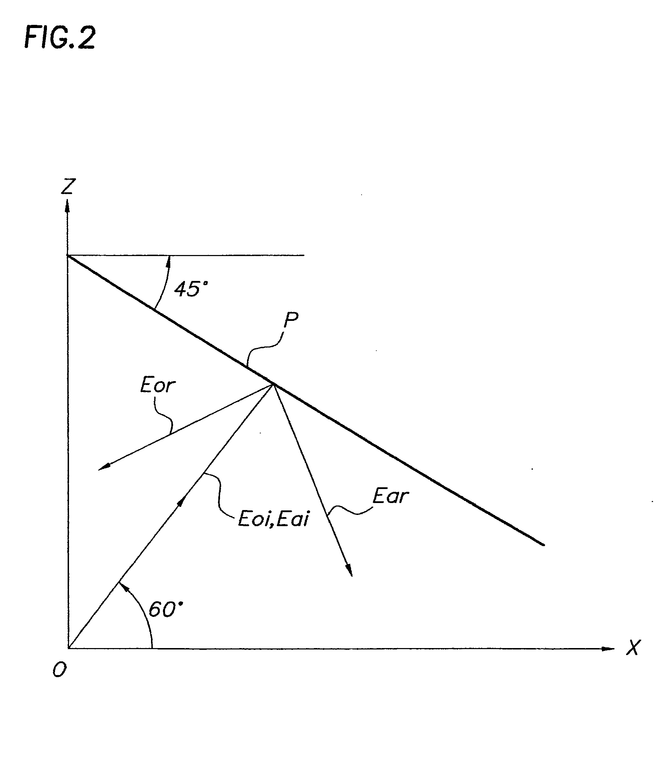

Dans l'exemple représenté sur la figure 2, la représentation schématique d'un premier exemple de réflexion des faisceaux acoustique et optique sur un plan plan oblique, parallèle à l'axe Oy d'un cristal biréfringent de dioxyde de Tellure ($TeO_2$), montre, dans le système orthonormé défini par les axes Ox et Oz du cristal biréfringent, les directions des énergies optique et acoustique incidentes et les directions des énergies optique et acoustique après réflexion sur un plan P oblique.

Dans le cas présent, le plan P est parallèle à l'axe Oy et fait un angle de 45° par rapport à l'axe Ox ; les énergies optique et acoustique incidentes Eoi, Eai, font un angle de 60° par rapport à l'axe Ox ; la réflexion des énergies optique Eor et acoustique Ear ne se fait pas selon les mêmes directions.

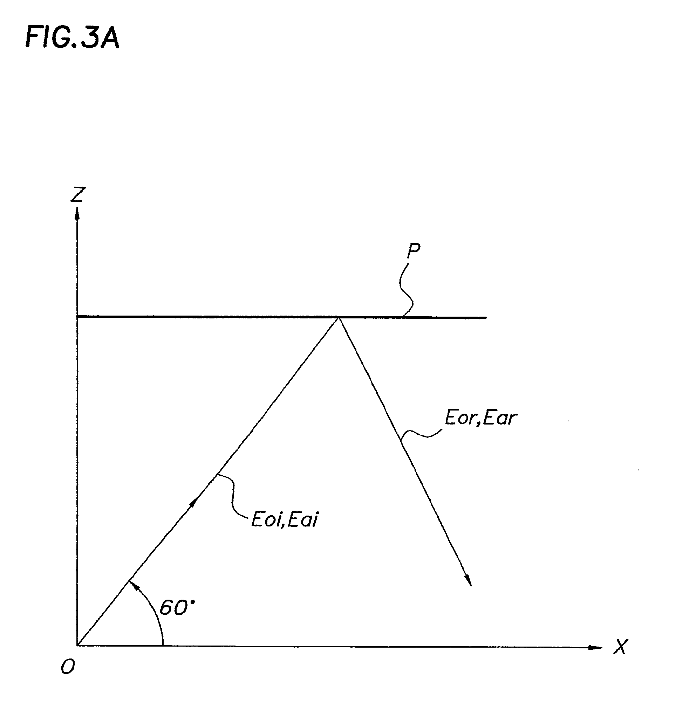

Dans l'exemple représenté sur la figure 3, la représentation schématique d'un deuxième exemple de réflexion des faisceaux acoustique et optique sur un plan parallèle aux axes Oy et Ox du cristal biréfringent de dioxyde de Tellure ($TeO_2$), montre, dans le système orthonormé défini par les axes Ox et Oz du cristal biréfringent, les directions des énergies optique et acoustique incidentes et les directions des énergies optique et acoustique après réflexion sur un plan P.

Dans le cas présent, le plan P est parallèle à l'axe Oy et à l'axe Ox ; les énergies optique et acoustique incidentes Eoi, Eai, font un angle de 60° par rapport à l'axe Ox ; la réflexion des énergies optique et acoustique Eor, Ear, se fait selon la même direction.

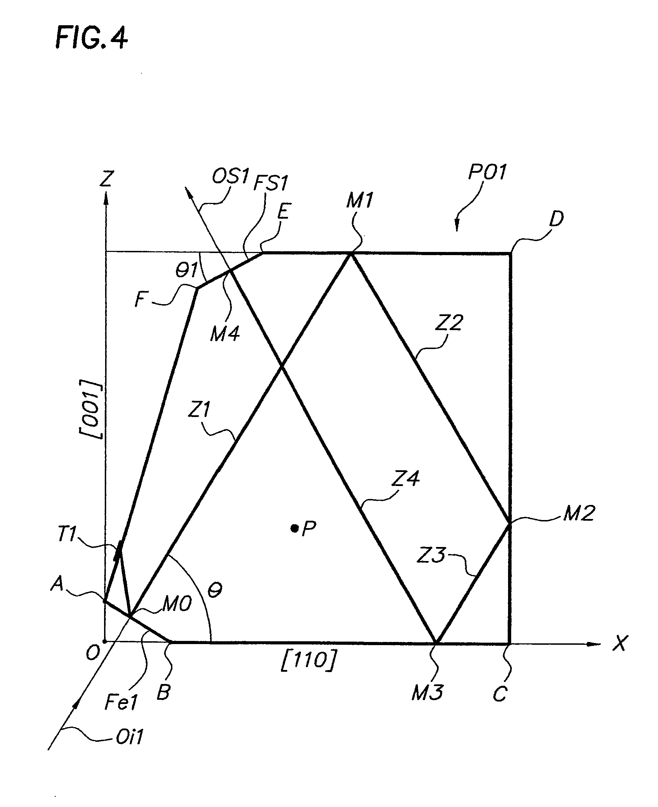

Dans l'exemple représenté sur la figure 4, une structure de filtre acousto-optique de grande longueur d'interaction optique et acoustique fait intervenir un cristal acousto-optique de dioxyde de Tellure ($TeO_2$), représenté de façon schématique par sa section polygonale $PO_1$ par un plan perpendiculaire à l'axe Oy et appelé plan de propagation P.

L'orientation du cristal acousto-optique est définie par ses deux axes [110] et [001]. Le plan de propagation P étant orthonormé respectivement suivant Ox et Oz, l'axe Ox est parallèle à l'axe [110], et l'axe Oz est parallèle à l'axe [001].

L'angle de propagation optique $\theta$ par rapport à la direction Ox est choisi selon un critère fonctionnel. Dans l'exemple de la figure 4, il est choisi pour maximiser le facteur de mérite de l'efficacité de diffraction $M_2$ donné approximativement par la formule :

$$M_2 = n_o^3 n_e^3 p^2 / \rho V^3,$$

dans laquelle : $n_o$, $n_e$, $p$, $\rho$ et $V$ sont respectivement l'indice ordinaire, l'indice extraordinaire, le coefficient élasto-optique efficace, la densité du cristal et la vitesse de phase des ondes acoustiques transversales dans la direction $\theta_a$ qui correspond à la direction $\theta$ de propagation de l'énergie acoustique.

La vitesse de phase des ondes acoustiques transversales $V$ est donnée par :

$$V = [V_x^2 \cos^2 \theta_a + V_z^2 \sin^2 \theta_a]^{1/2},$$

avec :

$$\tan\theta_a = (V_x/V_z)^2 \cdot \tan\theta,$$

qui est la condition d'alignement des énergies optique et acoustique, $V_x$ étant la vitesse acoustique selon Ox, et $V_z$ étant la vitesse acoustique selon Oz.

Pour les cristaux de $TeO_2$, $Hg_2Cl_2$ et KDP, les angles $\theta$ sont respectivement proches de 60°, 50° et 45°.

Les cristaux considérés ont une forme prismatique, définie par leur section droite polygonale par un plan parallèle au plan de propagation P et par la direction commune à leurs arêtes perpendiculaires au plan de propagation. Les faces d'intérêt de ces cristaux sont celles parallèles aux arêtes et contenant un segment donné de la section droite. Dans la suite, on désignera les cristaux considérés par leur section droite et les faces cristallines par le segment correspondant de section droite.

Dans le premier exemple de la figure 4, le cristal $PO_1$ de $TeO_2$, défini par le polygone $PO_1$ de sommets ABCDEF, comprend une première face AB contenant le segment AB, A selon l'axe Oz proche du point O et B selon l'axe Ox proche du point O, une seconde face BC selon l'axe Ox, puis une troisième face CD perpendiculaire à l'axe Ox, puis une quatrième face DE perpendiculaire à l'axe Oz, puis une cinquième face EF faisant un angle $\theta_1$ avec la normale à l'axe Oz, puis une sixième face FA fermant la section polygonale $PO_1$.

La face AB du cristal $PO_1$ constitue une face d'entrée $Fe_1$ sur laquelle est appliqué en un point M0, perpendiculairement à ladite face d'entrée $Fe_1$, un faisceau optique incident $O_{i1}$, polarisé perpendiculairement au plan de propagation P contenant ladite section polygonale $PO_1$ ; le faisceau optique incident $O_{i1}$ ainsi que le vecteur d'onde correspondant $k_{o1}$ sont colinéaires avec la normale à la face AB.

Un transducteur $T_1$, situé sur la face FA, génère un faisceau acoustique transverse, dont les vibrations sont perpendiculaires au plan de propagation P ; ce faisceau acoustique aboutit au point M0 de ladite face d'entrée $Fe_1$, puis est réfléchi de manière à ce que le vecteur de Poynting acoustique correspondant soit perpendiculaire à la susdite face AB.

Ainsi, le faisceau acoustique réfléchi et le susdit faisceau optique incident $O_{i1}$ parcourent une première zone d'interaction colinéaire Z1 entre le point M0 de la face AB et un point de réflexion M1 sur la face DE, puis parcourent une deuxième zone d'interaction colinéaire Z2 entre le point M1 sur la face DE et un point de réflexion M2 sur la face CD, puis parcourent une troisième zone d'interaction colinéaire Z3 entre le point M2 sur la face CD et un point de réflexion M3 sur la face BC, puis parcourent une quatrième zone d'interaction colinéaire Z4 entre le point M3 sur la face BC et un point M4 sur la face EF, laquelle constitue la face de sortie $Fs_1$ du faisceau optique réfléchi $O_{s1}$.

Dans chacune des zones d'interaction, la direction de propagation colinéaire est de $\theta$ ou de $-\theta$ ; compte tenu des éléments définis précédemment, le vecteur d'onde optique ordinaire incident $k_{o1}$ fait un angle $\theta$ proche de 60° avec l'axe [110].

La longueur d'interaction des ondes optique et acoustique a été multipliée par un facteur proche de 3 par rapport à la longueur du cristal dont la hauteur est définie par la distance entre les susdites faces BC et DE.

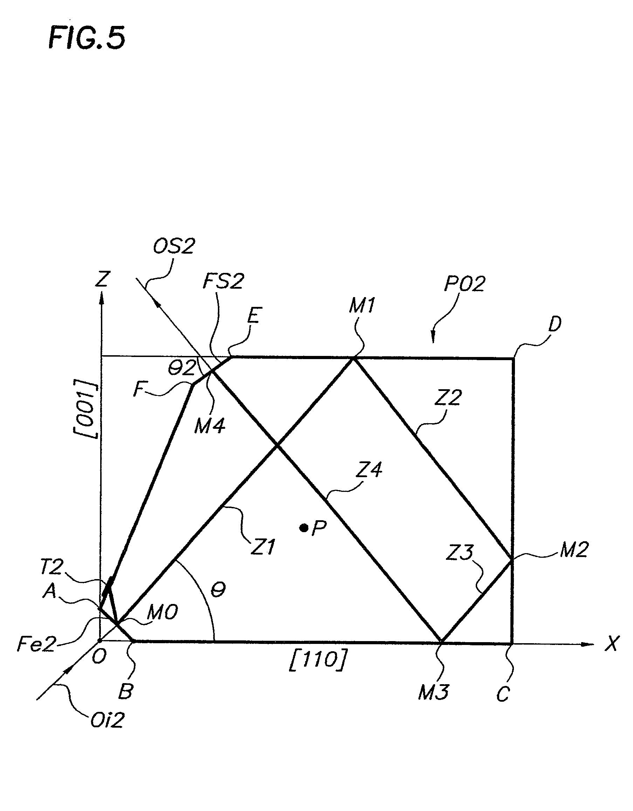

Dans l'exemple représenté sur la figure 5, une structure de filtre acousto-optique de grande longueur d'interaction optique et acoustique fait intervenir un cristal acousto-optique de Calomel ($Hg_2Cl_2$) représenté de façon schématique par sa section polygonale $PO_2$, située dans le plan de propagation P.

L'orientation du cristal acousto-optique est définie par ses deux axes [110] et [001]. Le plan de propagation P étant orthonormé respectivement suivant Ox et Oz, l'axe Ox est parallèle à l'axe [110], et l'axe Oz est parallèle à l'axe [001].

Le cristal $PO_2$ comprend une première face AB, A selon l'axe Oz proche du point O et B selon l'axe Ox proche du point O, une seconde face BC selon l'axe Ox, puis une troisième face CD perpendiculaire à l'axe Ox, puis une quatrième face DE perpendiculaire à l'axe Oz, puis une cinquième face EF faisant un angle $\theta_2$ avec la normale à l'axe Oz, puis une sixième face FA fermant la section polygonale $PO_2$, de sommets ABCDEF.

La face AB du cristal $PO_2$ constitue une face d'entrée $Fe_2$ sur laquelle est appliqué en un point M0, perpendiculairement à ladite face d'entrée $Fe_2$, un faisceau optique incident $O_{i2}$, polarisé perpendiculairement au plan de propagation P contenant ladite section polygonale $PO_2$ ; le faisceau optique incident $O_{i2}$ ainsi que le vecteur d'onde correspondant $k_{o2}$ sont colinéaires avec la anormale à la face AB.

Un transducteur $T_2$, situé sur la face FA, génère un faisceau acoustique transverse, dont les vibrations sont perpendiculaires au plan de propagation P ; ce faisceau acoustique aboutit au point M0 de ladite face d'entrée $Fe_2$, puis est réfléchi de manière à ce que le vecteur de Poynting acoustique correspondant soit perpendiculaire à la susdite face AB.

Ainsi, le faisceau acoustique réfléchi et le susdit faisceau optique incident $O_{i2}$ parcourent une première zone d'interaction colinéaire Z1 entre le point M0 de la face AB et un point de réflexion M1 sur la face DE, puis parcourent une deuxième zone d'interaction colinéaire Z2 entre le point M1 sur la face DE et un point de réflexion M2 sur la face CD, puis parcourent une troisième zone d'interaction colinéaire Z3 entre le point M2 sur la face CD et un point de réflexion M3 sur la face BC, puis parcourent une quatrième zone d'interaction colinéaire Z4 entre le point M3 sur la face BC et un point M4 sur la face EF, laquelle constitue la face de sortie $Fs_2$ du faisceau optique réfléchi $O_{s2}$.

Dans chacune des zones d'interaction, la direction de propagation colinéaire est de $\theta$ ou de $-\theta$ ; compte tenu des éléments définis précédemment, le vecteur d'onde optique ordinaire incident $k_{o1}$ fait un angle $\theta$ proche de 50° avec l'axe [110].

La longueur d'interaction des ondes optique et acoustique a été multipliée par un facteur proche de 3 par rapport à la longueur du cristal dont la hauteur est définie par la distance entre les susdites faces BC et DE.

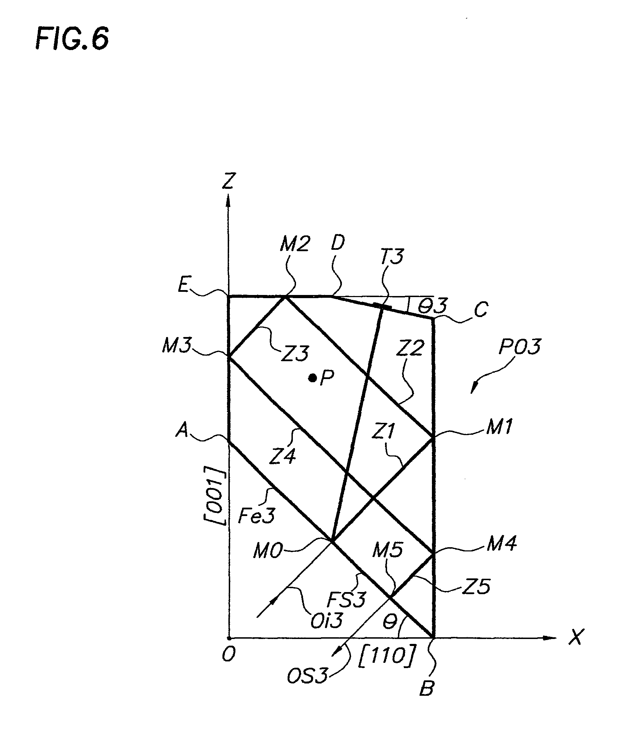

Dans l'exemple représenté sur la figure 6, une structure de filtre acousto-optique de grande longueur d'interaction optique et acoustique fait intervenir un cristal acousto-optique de KDP, représenté de façon schématique par sa section polygonale $PO_3$, située dans le plan de propagation P; la structure proposée est différente de celles décrites précédemment, compte tenu des caractéristiques d'anisotropie et de biréfringence de ce matériau.

L'orientation du cristal acousto-optique est définie par ses deux axes [100] et [001]. Le plan de propagation P étant orthonormé respectivement suivant Ox et Oz, l'axe Ox est parallèle à l'axe [100], et l'axe Oz est parallèle à l'axe [001].

Le cristal $PO_3$ comprend une première face AB, A selon l'axe Oz et B selon l'axe Ox, une seconde face BC perpendiculaire à l'axe Ox, puis une troisième face CD oblique faisant un angle $\theta_3$ avec la normale à l'axe Oz, puis une quatrième face DE perpendiculaire à l'axe Oz, puis une cinquième face EA fermant la section po-

lygonale $PO_3$, de sommets ABCDE.

La face AB du cristal $PO_3$ constitue une face d'entrée $Fe_3$ sur laquelle est appliqué en un point M0, perpendiculairement à ladite face d'entrée $Fe_3$, un faisceau optique incident $Oi_3$, polarisé perpendiculairement au plan de propagation P contenant ladite section polygonale $PO_3$ ; le faisceau optique incident $O_{i3}$ ainsi que le vecteur d'onde correspondant $k_{o3}$ sont colinéaires avec la normale à la face AB.

Un transducteur $T_3$, situé sur la face CD, génère un faisceau acoustique transverse, dont les vibrations sont perpendiculaires au plan de propagation P ; ce faisceau acoustique aboutit au point M0 de ladite face d'entrée $Fe_3$, puis est réfléchi de manière à ce que le vecteur de Poynting acoustique correspondant soit perpendiculaire à la susdite face AB.

Ainsi, le faisceau acoustique réfléchi et le susdit faisceau optique incident $O_{i3}$ parcourent une première zone d'interaction colinéaire Z1 entre le point M0 de la face AB et un point de réflexion M1 sur la face BC, puis parcourent une deuxième zone d'interaction colinéaire Z2 entre le point M1 sur la face BC et un point de réflexion M2 sur la face DE, puis parcourent une troisième zone d'interaction colinéaire Z3 entre le point M2 sur la face DE et un point de réflexion M3 sur la face EA, puis parcourent une quatrième zone d'interaction colinéaire Z4 entre le point M3 sur la face EA et un point M4 sur la face BC, puis parcourent une cinquième zone d'interaction colinéaire Z5 entre le point M4 sur la face BC et un point M5 sur la face AB, laquelle constitue la face de sortie $Fs_3$ du faisceau optique réfléchi $O_{s2}$, ladite face de sortie $Fs_3$ étant confondue avec ladite face d'entrée $Fe_3$.

Dans chacune des zones d'interaction, la direction de propagation colinéaire est de $\theta$ ou de $-\theta$ ; compte tenu des éléments définis précédemment, le vecteur d'onde optique ordinaire incident $k_{o1}$ fait un angle $\theta$ proche de 45° avec l'axe [100].

La longueur d'interaction des ondes optique et acoustique a été multipliée par un facteur proche de 5 par rapport à la longueur du cristal dont la hauteur est définie par la distance entre les susdites faces BC et EA.

Selon les trois exemples, cités précédemment, la solution consistant à replier les faisceaux par des réflexions optique et acoustique sur les faces cristallines du cristal acousto-optique biréfringent, permet de multiplier par un facteur proche, voire supérieur à 3, par rapport à la longueur dudit cristal; ce procédé autorise ainsi l'augmentation significative de la longueur d'interaction optique et acoustique tout en respectant les contraintes économiques liées à la réalisation de tels cristaux.

Avantageusement, les susdites faces réfléchissantes (AB, BC, CD, DE, EA) pourront comprendre, ou non, des couches minces diélectriques ou des films minces métalliques.

Avantageusement le susdit transducteur piézo-électrique ($T_1$, $T_2$, $T_3$) destiné à générer une onde acoustique transversale sera un transducteur soudé sur une face (FA, CD) du cristal acousto-optique biréfringent ($PO_1$, $PO_2$, $PO_3$).

Une première application de ce filtre acousto-optique de grande longueur d'interaction acousto-optique, selon l'invention, concerne les extenseurs des lasers à dérive de fréquence tels que ceux décrits dans l'article de D. Strickland et G. Mourou : « Compression of amplified chirped optical pulses », Optics Communications, 56 (1985), p.219, qui permettent de générer des impulsions lumineuses brèves de très grande puissance. Dans ce type de laser, un extenseur programmable en amplitude et en phase de grande durée d'extension est souhaitable pour compenser des défauts d'amplitude et de phase des compresseurs.

Une deuxième application de ce filtre acousto-optique de grande longueur d'interaction acousto-optique, selon l'invention, concerne les analyseurs de spectres qui utilisent des filtres acousto-optiques AOTF (Acousto-Optic Tunable Filters) rapides et compacts. Dans ce type de filtre, une grande longueur d'interaction acousto-optique permet d'augmenter notablement la résolution spectrale de ces filtres.

Une troisième application de ce filtre acousto-optique de grande longueur d'interaction acousto-optique, selon l'invention, concerne la génération d'impulsions lumineuses brèves multiples, d'espacements temporels réglables sur une très grande durée, obtenues par la programmation simultanée de plusieurs signaux acoustiques dans le filtre acousto-optique.

## Revendications

1. Procédé de filtrage acousto-optique, dans lequel on fournit un cristal acousto-optique biréfringent ($PO_1$, $PO_2$, $PO_3$) ayant une face d'entrée ($Fe_1$,$Fe_2$,$Fe_3$) destiné à recevoir une onde optique incidente ($O_{i1}$, $O_{i2}$,$O_{i3}$), lequel cristal acousto-optique ($PO_1$, $PO_2$, $PO_3$) comprend sur l'une de ses faces (FA, CD) un transducteur piézo-électrique ($T_1$, $T_2$, $T_3$) destiné à générer une onde acoustique transversale dont l'énergie se propage de manière colinéaire à l'énergie d'une onde optique incidente ($O_{i1}$, $O_{i2}$, $O_{i3}$), tout au long du trajet de ladite onde optique incidente ($O_{i1}$, $O_{i2}$, $O_{i3}$), dans ledit cristal acousto-optique biréfringent ($PO_1$, $PO_2$, $PO_3$), le susdit cristal acousto-optique comprenant des faces réfléchissantes (AB, BC,CD,DE,EA) pour l'onde optique incidente ainsi que pour l'onde acoustique transversale, le procédé comprenant une étape d'application de l'onde optique incidente sur la susdite face d'entrée et une étape de génération de l'onde acoustique transversale, **caractérisé en ce que** et **en ce que** la face d'entrée, la face comprenant le transducteur piézo-électrique et les faces réfléchissantes sont disposées, de sorte que l'onde acoustique transversale et l'onde optique incidente ($O_{i1}$, $O_{i2}$, $O_{i3}$) parcourent un trajet comportant des réflexions multiples sur l'une ou l'autre des faces réfléchissantes (AB, BC, CD, DE, EA) du cris-

tal acousto-optique biréfringent ($PO_1$, $PO_2$, $PO_3$), les dites faces réfléchissantes sont perpendiculaires aux axes de symétrie communs à la courbe des lenteurs acoustiques et aux courbes des indices optiques ordinaire et extraordinaire dudit cristal acousto-optique ($PO_1$, $PO_2$, $PO_3$)

2. Application du procédé selon la revendication 1 à la réalisation d'extenseurs des lasers à dérive de fréquence.

3. Application du procédé selon la revendication 1 à la réalisation d'analyseurs de spectre à filtres acousto-optiques AOTF.

4. Application du procédé selon la revendication 1 à la réalisation de générateurs d'impulsions lumineuses brèves multiples d'espacements temporels réglables.

5. Dispositif pour le filtrage acousto-optique comprenant un cristal acousto-optique biréfringent (PO1, PO2, PO3) ayant une face d'entrée ($Fe_1$,$Fe_2$,$Fe_3$) destinée à recevoir une onde optique incidente ($Oi_1$, $Oi_2$,$Oi_3$) , lequel cristal acousto-optique (PO1, PO2, PO3) comprend sur l'une de ses faces (FA, CD) un transducteur piézo-électrique (T1, T2, T3) destiné à générer une onde acoustique transversale dont l'énergie se propage de manière colinéaire à l'énergie de l' onde optique incidente (Oil, Oi2, Oi3), tout au long du trajet de ladite onde optique incidente (Oil, Oi2, Oi3), dans le susdit cristal acusto-optique biréfringent (PO1, PO2, PO3), le susdit cristal acousto-optique comprenant des faces réfléchissantes (AB,BC,CD,DE,EA) pour l'onde optique incidente ainsi que pour l'onde acoustique transversale , **caractérisé en ce que** ces dites faces réfléchissantes sont perpendiculaires aux axes de symétrie communs à la courbe des lenteurs acoustiques et aux courbes des indices optiques ordinaire et extraordinaire dudit cristal acousto-optique (PO1, PO2, PO3) et **en ce que** laface d'entrée, la face comprenant le transducteur piézo- électrique et les faces réfléchissantes sont disposées de sorte que l'onde acoustique transversale et l'onde optique incidente (Oi1, Oi2, Oi3) parcourent un trajet comportant des réflexions multiples sur l'une ou l'autre des faces réfléchissantes (AB, BC, CD, DE, EA) du cristal acousto-optique biréfringent (PO1, PO2, PO3).

6. Dispositif selon la revendication 5, **caractérisé en ce que** les faces réfléchissantes (AB, BC, CD, DE, EA) comprennent des couches minces diélectriques ou des films minces métalliques.

7. Dispositif selon la revendication 5 ou 6, **caractérisé en ce que** le transducteur piézo-électrique ($T_1$, $T_2$, $T_3$) destiné à générer une onde acoustique transversale est un transducteur soudé sur une face (FA, CD) du cristal acousto-optique biréfringent ($PO_1$, $PO_2$, $PO_3$).

8. Dispositif selon l'une des revendications 5 à 7, **caractérisé en ce que** le cristal acousto-optique ($PO_1$, $PO_2$, $PO_3$) fait partie des classes cristallines tétragonales 422, 4/mmm, et 4/2m.

9. Dispositif selon la revendication 8, **caractérisé en ce que** le susdit cristal acousto-optique ($PO_1$) est du dioxyde de tellure ayant pour formule $TeO_2$.

10. Dispositif selon la revendication 8, **caractérisé en ce que** le susdit cristal acousto-optique ($PO_2$) est du alomel ayant pour formule $Hg_2Cl_2$.

11. Dispositif selon la revendication 8, **caractérisé en ce que** le susdit cristal acousto-optique ($PO_3$) est du KDP.

## Claims

1. An acoustic-optical filtering method, in which a birefringent acoustic-optical crystal ($PO_1$, $PO_2$, $PO_3$) is provided having an input surface ($Fe_{i1}$, $Fe_2$, $Fe_3$) intended to receive an incident optical wave ($Oi_1$, $Oi_2$, $Oi_3$), said acoustic-optical crystal ($PO_1$, $PO_2$, $PO_3$) comprises, on one of its surfaces (FA, CD), a piezoelectric transducer ($T_1$, $T_2$, $T_3$) intended to generate a transverse acoustic wave whereof the energy propagates collinearly to the energy of an incident optical wave ($Oi_1$, $Oi_2$, $Oi_3$), along the entire path of said incident optical wave (Oi1, Oi2, Oi3), in said birefringent acoustic-optical crystal ($PO_1$, $PO_2$, $PO_3$), the aforementioned acoustic-optical crystal comprising reflective surfaces (AB, BC, CD, DE, EA) for the incident optical wave as well as for the transverse acoustic wave, the method comprising a step for applying the incident optical wave on the aforementioned input surface and a step for generating the transverse acoustic wave, **characterized in that** said reflective surfaces are perpendicular to the axes of symmetry shared by the acoustic slowness curve and the ordinary and extraordinary optical index curves of said acoustic-optical crystal ($PO_1$, $PO_2$, $PO_3$) and **in that** the input surface, the surface comprising the piezoelectric transducer and the reflective surfaces are arranged so that the transverse acoustic wave and the incident optical wave ($Oi_1$, $Oi_2$, $Oi_3$) travel a path including multiple reflections on one or the other of the reflective surfaces (AB, BC, CD, DE, EA) of the birefringent acoustic-optical crystal ($PO_1$, $PO_2$, $PO_3$).

**2.** The application of the method according to claim 1 to the production of expanders for frequency drift lasers.

**3.** The application of the method according to claim 1 to the production of acousto-optic tunable filter (AOTF) spectrum analyzers.

**4.** The application of the method according to claim 1 to the production of multiple brief light pulse generators with adjustable time spacings.

**5.** An acoustic-optical filtering device comprising a birefringent acoustic-optical crystal ($PO_1$, $PO_2$, $PO_3$) having an input surface ($Fe_1$, $Fe_2$, $Fe_3$) intended to receive an incident optical wave ($Oi_1$, $Oi_2$, $Oi_3$), said acoustic-optical crystal ($PO_1$, $PO_2$, $PO_3$) comprises, on one of its surfaces (FA, CD), a piezoelectric transducer (T1, T2, T3) intended to generate a transverse acoustic wave whereof the energy propagates colinearly to the energy of the incident optical wave ($Oi_1$, $Oi_2$, $Oi_3$), along the entire path of said incident optical wave ($Oi_1$, $Oi_2$, $Oi_3$), in the aforementioned birefringent acoustic-optical crystal ($PO_1$, $PO_2$, $PO_3$), the aforementioned acoustic-optical crystal comprising reflective surfaces (AB, BC, CD, DE, EA) for the incident optical wave as well as for the transverse acoustic wave, **characterized in that** said reflective surfaces are perpendicular to the axes of symmetry shared by the acoustic slowness curve and the ordinary and extraordinary optical index curves of said acoustic-optical crystal ($PO_1$, $PO_2$, $PO_3$) and **in that** the input surface, the surface comprising the piezoelectric transducer and the reflective surfaces are arranged so that the transverse acoustic wave and the incident optical wave ($Oi_1$, $Oi_2$, $Oi_3$) travel a path including multiple reflections on one or the other of the reflective surfaces (AB, BC, CD, DE, EA) of the birefringent acoustic-optical crystal ($PO_1$, $PO_2$, $PO_3$).

**6.** The device according to claim 5, **characterized in that** the reflective surfaces (AB, BC, CD, DE, EA) comprise thin dielectric layers or thin metal films.

**7.** The device according to claim 5 or 6, **characterized in that** the piezoelectric transducer ($T_1$, $T_2$, $T_3$) intended to generate a transverse acoustic wave is a transducer welded on a surface (FA, CD) of the birefringent acoustic-optical crystal ($PO_1$, $PO_2$, $PO_3$).

**8.** The device according to one of claims 5 to 7, **characterized in that** the acoustic-optical crystal ($PO_1$, $PO_2$, $PO_3$) is part of tetragonal crystalline classes 422, 4/mmm, and 4/2m.

**9.** The device according to claim 8, **characterized in that** the aforementioned optical-acoustic crystal ($PO_1$) is tellurium dioxide, having formula $TeO_2$.

**10.** The device according to claim 8, **characterized in that** the aforementioned acoustic-optical crystal ($PO_2$) is calomel having formula $Hg_2Cl_2$.

**11.** The device according to claim 8, **characterized in that** the aforementioned acoustic-optical crystal ($PO_3$) is KDP.

**Patentansprüche**

**1.** Verfahren für die akustisch-optische Filterung, in dem ein doppelbrechender akustisch-optischer Kristall ($PO_1$, $PO_2$, $PO_3$) bereitgestellt wird, der eine Eintrittsfläche ($Fe_1$, $Fe_2$, $Fe_3$) besitzt, die dazu bestimmt ist, eine auftreffende Lichtwelle ($O_{i1}$, $O_{i2}$, $O_{i3}$) zu empfangen, wobei der akustisch-optische Kristall ($PO_1$, $PO_2$, $PO_3$) auf einer seiner Flächen (FA, CD) einen piezoelektrischen Wandler ($T_1$, $T_2$, $T_3$) aufweist, der dazu bestimmt ist, eine transversale Schallwelle zu erzeugen, deren Energie sich kolinear mit der Energie einer auftreffenden Lichtwelle ($O_{i1}$, $O_{i2}$, $0_{i3}$) auf der gesamten Bahn der auftreffenden Lichtwelle ($O_{i1}$, $O_{i2}$, $O_{i3}$) in dem doppelbrechenden akustisch-optischen Kristall ($PO_1$, $PO_2$, $PO_3$) ausbreitet, wobei dieser akustisch-optische Kristall reflektierende Flächen (AB, BC, CD, DE, EA) für die auftreffende Lichtwelle sowie für die transversale Schallwelle aufweist, wobei das Verfahren einen Schritt des Anwendens der auftreffenden Lichtwelle auf die oben genannte Eintrittsfläche und einen Schritt des Erzeugens der transversalen Schallwelle umfasst, **dadurch gekennzeichnet, dass** die reflektierenden Flächen zu den Symmetrieachsen, die der Krümmung der Schallverzögerer und den Krümmungen der gewöhnlichen und außergewöhnlichen optischen Indizes des akustisch-optischen Kristalls ($PO_1$, $PO_2$, $PO_3$) gemeinsam sind, senkrecht sind und dass die Eintrittsfläche, die Fläche, die den piezoelektrischen Wandler aufweist, und die reflektierenden Flächen in der Weise angeordnet sind, dass die transversale Schallwelle und die auftreffende Lichtwelle ($O_{i1}$, $O_{i2}$, $O_{i3}$) eine Bahn durchlaufen, die Mehrfachreflexionen auf der einen oder der anderen der reflektierenden Flächen (AB, BC, CD, DE, EA) des doppelbrechenden akustisch-optischen Kristalls ($PO_1$, $PO_2$, $PO_3$) enthält.

**2.** Anwendung des Verfahrens nach Anspruch 1 auf die Verwirklichung von Erweiterern von Lasern mit Frequenzdrift.

**3.** Anwendung des Verfahrens nach Anspruch 1 auf die Verwirklichung von Spektrumanalysatoren mit akustisch-optischen Filtern (AOTF).

**4.** Anwendung des Verfahrens nach Anspruch 1 auf die Verwirklichung von Generatoren für mehrfache kurze Lichtimpulse mit zeitlich einstellbaren Abständen.

**5.** Vorrichtung für die akustisch-optische Filterung, mit einem doppelbrechenden akustisch-optischen Kristall ($PO_1$, $PO_2$, $PO_3$), der eine Eintrittsfläche ($Fe_1$, $Fe_2$, $Fe_3$) besitzt, die dazu bestimmt ist, eine auftreffende Lichtwelle ($O_{i1}$, $O_{i2}$, $O_{i3}$) zu empfangen, wobei der akustisch-optische Kristall ($PO_1$, $PO_2$, $PO_3$) auf einer seiner Flächen (FA, CD) einen piezoelektrischen Wandler ($T_1$, $T_2$, $T_3$) aufweist, der dazu bestimmt ist, eine transversale Schallwelle zu erzeugen, deren Energie sich kolinear mit der Energie der auftreffenden Lichtwelle ($O_{i1}$, $O_{i2}$, $O_{i3}$) auf der gesamten Länge der Bahn der auftreffenden Lichtwelle ($O_{i1}$, $O_{i2}$, $O_{i3}$) in dem doppelbrechenden akustisch-optischen Kristall ($PO_1$, $PO_2$, $PO_3$) ausbreitet, wobei der akustisch-optische Kristall reflektierende Flächen (AB, BC, CD, DE, EA) für die auftreffende Lichtwelle sowie für die transversale Schallwelle aufweist, **dadurch gekennzeichnet, dass** diese reflektierenden Flächen zu den Symmetrieachsen, die der Krümmung der Schallverzögerer und den Krümmungen der gewöhnlichen und außergewöhnlichen optischen Indizes des akustisch-optischen Kristalls ($PO_1$, $PO_2$, $PO_3$) gemeinsam sind, senkrecht sind und dass die Eintrittsfläche, die Fläche, die den piezoelektrischen Wandler aufweist, und die reflektierenden Flächen in der Weise angeordnet sind, dass die transversale Schallwelle und die auftreffende Lichtwelle ($O_{i1}$, $O_{i2}$, $O_{i3}$) eine Bahn durchlaufen, die Mehrfachreflexionen auf der einen oder der anderen der reflektierenden Flächen (AB, BC, CD, DE, EA) des doppelbrechenden akustisch-optischen Kristalls ($PO_1$, $PO_2$, $PO_3$) enthält.

**6.** Vorrichtung nach Anspruch 5,
**dadurch gekennzeichnet, dass** die reflektierenden Flächen (AB, BC, CD, DE, EA) dieelektrische Dünnschichten oder metallische Dünnschichten umfassen.

**7.** Vorrichtung nach Anspruch 5 oder 6,
**dadurch gekennzeichnet, dass** der piezoelektrische Wandler ($T_1$, $T_2$, $T_3$), der dazu bestimmt ist, eine transversale Schallwelle zu erzeugen, ein Wandler ist, der auf eine Fläche (FA, CD) des doppelbrechenden akustisch-optischen Kristalls ($PO_1$, $PO_2$, $PO_3$) geschweißt ist.

**8.** Vorrichtung nach einem der Ansprüche 5 bis 7,
**dadurch gekennzeichnet, dass** der akustisch-optische Kristall ($PO_1$, $PO_2$, $PO_3$) einen Teil der tetragonalen Kristallklassen 422, 4/mmm und 4/2m bildet.

**9.** Vorrichtung nach Anspruch 8,
**dadurch gekennzeichnet, dass** der akustisch-optische Kristall ($PO_1$) Tellurdioxid, das die Formel $TeO_2$ hat, ist.

**10.** Vorrichtung nach Anspruch 8,
**dadurch gekennzeichnet, dass** der akustisch-optische Kristall ($PO_2$) Calomel, das die Formel $Hg_2Cl_2$ hat, ist.

**11.** Vorrichtung nach Anspruch 8,
**dadurch gekennzeichnet, dass** der akustisch-optische Kristall ($PO_3$) KDP ist.

FIG.1

Z
[001]
Ko
no
ko
θo
no
ne
X
[110]
θa
0
1/V110
θo
1/V001
ka
Ka

FIG.2

Z
45°
P
Eor
Eoi,Eai
Ear
60°
O
X

FIG.3A

Z
P
Eor,Ear
Eoi,Eai
60°
O
X

FIG.4

Z
OS1
FS1
E
M1
P01
D
θ1
F
M4
Z2
[001]
Z1
Z4
T1
P
M2
Z3
A
M0
θ
O
[110]
X
Fe1
B
M3
C
Oi1

FIG.5

OS2
Z
FS2
P02
E
M1
D
θ2
F
M4
[001]
Z2
Z4
P
Z1
M2
Z3
T2
A
θ
M0
Fe2
O
[110]
X
B
M3
C
Oi2

FIG.6

Z
M2
D
T3
E
θ3
C
M3
Z3
Z2
P03
P
A
Z1
M1
Z4
[001]
Fe3
M0
M5
M4
FS3
Z5
Oi3
θ
X
O
[110]
OS3
B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 9610717, P. Tournois


### Littérature non-brevet citée dans la description


- **V.B. Voloshinov.** Close to collinear acousto-optique interaction in Paratellurite. *Optical Engineering,* 1992, vol. 31, 2089
- **V.B. Voloshinov ; N.V. Polikarpova.** Application of Acousto-Optic Interactions in Anisotropic Media for Control of Light Radiation. *Acta Acustica united with Acustica,* 2003, vol. 89, 930-935
- **D. Kaplan ; P. Tournois.** Theory and performance of the acousto-optic programmable dispersive filter used for femtosecond laser pulse shaping. *J. Phys. IV,* 2002, vol. 12, Pr5-6975
- **D. Strickland ; G. Mourou.** Compression of amplified chirped optical pulses. *Optics Communications,* 1985, vol. 56, 219